# EUROPEAN PATENT APPLICATION

(11) **EP 0 640 279 A1**
(43) Date of publication of application: **01.03.1995**
(21) Application number: 94112011.5
(22) Date of filing: 02.08.1994
(51) Int. Cl.: A01G 9/22

(54) **A winding/unwinding device for sheets or generally webs, for padding the vault of closed metal constructions, especially growing greenhouses and sports facilities**

(30) Priority: 25.08.1993 IT MI931850
(71) Applicant: Piscopello, Piero, I-73057 Taviano (Lecce) (IT)
(72) Inventor: Piscopello, Piero, I-73057 Taviano (Lecce) (IT)
(74) Representative: Savi, Alberto

(57) **Abstract**

A winding/unwinding device for sheets or generally webs, for padding the vault of closed metal constructions, especially growing greenhouses and sports facilities, comprising separate means for winding/unwinding the sheet or web (7), consisting of a shaft (2) to which an extreme edge of the sheet or web (7) is secured and said means for unwinding the sheet consisting of a second shaft (12) onto which one or more ropes (8) can be wound, said ropes (8) being coupled by means of springs (29) to a hooking profile (16) which is secured to the lower edge of sheet or web (7).

## Description

The present invention relates to a winding/unwinding device for sheets or generally webs, for padding the vault of constructions comprising a metal framework which is closed by a sheet or web, especially for growing greenhouses and sports facilities.

They are known constructions usually having a barrel-vault ceiling with a metal framework closed by a web which is spread over said framework, which in turn is made of tubular or section metal.

Said structures are tipically used as growing greenhouses or sports facilities.

The vaults of said structures are closed with stiff padding panels or preferably with variously coloured or transparent sheets or webs.

In said closed metal constructions, the problem arises of the internal microclimate control.

The cheapest and most widespread method presently used consists in opening/closing apertures on the outer walls of said closed metal constructions.

Such a solution is often per se not enough in that it provides a low exchange surface / volume ratio, thereby not permitting a quick air replacement.

Moreover, such a solution does not easily allow a replacement of the upper air layer, which tends to remain imprisoned under the vault.

It is therefore necessary to provide an opening/closing system also on the vault.

Stiff panels hinged to the construction are currently used on the ridge, said panels being rotated for partially opening or closing the upper part of the vault.

Said solution is not however satisfying in that the openings have small dimensions in order to save costs and consequently can not provide a quick air replacement.

Moreover, the stiff panels usually employed besides being more expensive, have a higher light absorbance value which can be a heavy-weighing draw-back, especially for crop protection constructions.

A chief object of the present invention is the elimination of the above-mentioned draw-backs by discovering a device that allows the vaults of closed metal constructions to be opened/closed by simply winding up, completely or partly, the vault covering web.

Another object of the present invention is the realization of a device that can be readily and unexpensively manufactured.

The above and other objects of the invention are achieved by a winding/unwinding device for sheets or webs for padding the vault of closed metal constructions, especially growing greenhouses and sports facilities, characterized in that it comprises separate means for winding/unwinding the sheet or web.

Further features and advantages of the present invention will be more clearily understood from the description of a preferred, yet not exclusive, embodiment of the illustrated device, which is provided as a non limiting example in the enclosed drawing, in which:
figure 1 is a schematic perspective view of the closed metal construction;
figure 2 is a partial view from the bottom of the device;
figure 3 is a side cross-sectional view of the device;

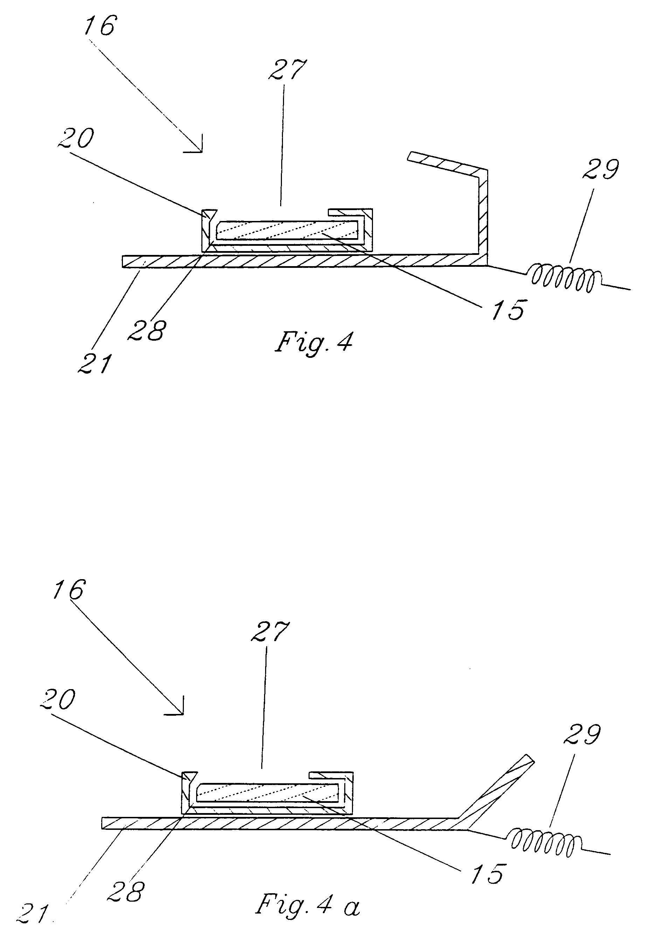

figure 4 is a side, cross-sectional view of a detail of the device according to a preferred embodiment;
figure 4a is a side cross-sectional view of a detail of the device according to an alternative embodiment.

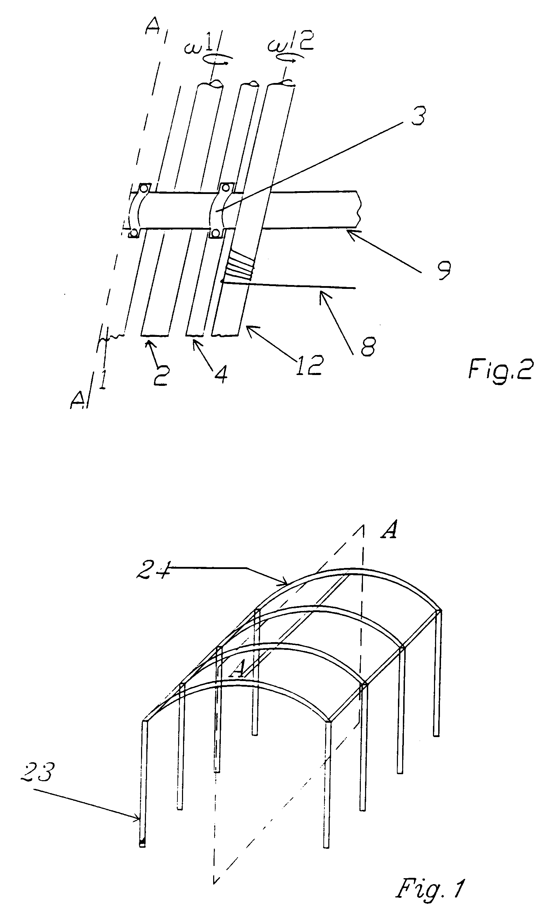

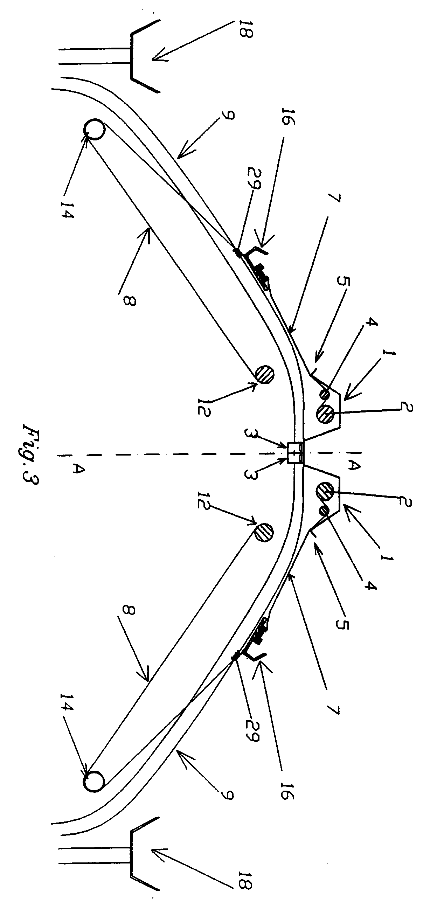

Referring to the above-mentioned figures, the closed metal construction, which is schematically shown in figure 1, comprises stanchions 23 and arches 24 and is provided with winding/unwinding means for the vault-covering web 7, which are shown in figures 2 and 3.

These means comprise a double carter 1, (said carter) being secured by means of suitable fasteners 3 to the ridge of the vault and simmetrically arranged relative to the longitudinal simmetry plane A-A of the greenhouse.

Inside carter 1 a shaft 2, onto which the sheet or web 7 is wound / unwound, and a tube 4 are arranged, the function of tube 4 being to keep, together with the cusp 5 of carter 1, the sheet or web piece 7 nearby shaft 2 tense.

Said winding/unwinding means for the sheet or web 7 also comprise a profile 16 which slides on the vault arches 24 and is hooked to the lower end of sheet or web 7.

Said winding/unwinding means for the web 7 also comprise springs 29 which connect the profile 16 with ropes 8 which are driven by shaft 12 and, over pulleys 14, pull the sheet or web 7 downwards.

The ends of said profile 16 are rispectively engaged in carter 1 (closed vault position) and in a drainage groove 18 (completely opened vault position).

In its preferred embodiment, the profile 16 comprises a slot 28 which is parallel to the longitudinal axis of the body and which is provided with an opening 27 on a side wall, said opening 27 being defined on one side by a rearwards bent edge of the profile and, on the other side, by a wall that is essentially orthogonal to the bottom of said slot 28.

Through said opening 27 a sheet or web 7 is inserted which is then secured by inserting a semirigid insert 15.

The profile 16 is preferably realized in two parts 20 and 21 which are thereafter joined to each other, the first of said parts being for blocking the sheet or web and the second one, which is usually heavier than the first one, resting on the vault arches and being engaged with its ends in carter 1 and drainage groove 18, respectively.

In the preferred embodiment, the torque is supplied to shaft 2 which transmits it through a suitable, not shown, coupling arrangement, tipically comprising belts or chains, to shaft 12.

In the preferred embodiment, wind-protection means (not shown) are also provided, said means being arranged in correspondence with the first and last arches in order to prevent wind blowing in the same direction as the longitudinal simmetry axis of the metal construction from entering the space between web 7 and arch 9.

Said means symmetric with respect to the longitudinal symmetry plan A-A, consist in a web covering the transversal slot which is formed between web 7 and arch 9.

At least the upper part of said wind-protection web is preferably bent forward in order to reduce the pressure wind applies onto said protection web.

The operation is as follows:
in the sheet or web winding step the power is almost completely taken up by shaft 2 which draws the sheet or web 7, while shaft 12 unwinds the rope 8 in order to release the sheet or web 7, thereby allowing it to be displaced towards shaft 2.

In the unwinding step the power is on the contrary almost completely taken up by shaft 12 which rotates and thereby draws the ropes 8, which are connected through springs 29 and the profile 16 to the lower edge of sheet or web 7, while shaft 2 unwinds the sheet or web 7, thereby allowing it to move.

The task of springs 29 is to smooth out the traction of ropes 8 onto web 7, in order to prevent possible tearings from occuring.

The springs 29 provide moreover a compensation for possible sliding differences between the ends of the profile.

In the preferred embodiment, the direction of rotation of shafts 2 and 12 is always concordant.

The invention disclosed is suscettible to many changes and variations which are all within the scope of the invention idea.

In practice embodiments the materials emploied and the dimensions can be freely chosen, according to the needs.

## Claims

1. A winding/unwinding device for sheets or generally webs, for padding the vault of closed metal constructions, especially growing greenhouses and sports facilities, characterized in that it comprises separate means for winding/unwinding the sheet or web.

2. A device according to claim 1, characterized in that said means adapted for winding a sheet consist of a shaft to which an extreme edge of the sheet or web is secured and in that said means for unwinding the sheet consist of a second shaft onto which one or more ropes can be wound, said ropes being coupled by means of springs to a hooking profile 16 which is secured to the lower edge of sheet or web 7.

3. A device according to claims 1 and 2, characterized in that it comprises elastic web-tensioning means.

4. A device according to claim 3, characterized in that said elastic web-tensioning means comprise a carter with an elastic edge, which applies a pressure onto the web, and a roller.

5. A winding/unwinding device for sheets or generally webs, for padding the vault of closed metal constructions, especially growing greenhouses and sports facilities, characterized in that it comprises:
a shaft which is arranged over the vault ridge onto which the web is wound/unwound;
a profile which slides over the arches that make up the vault, said profile being hooked to the lower edge of the web;
motor means for rotating the shaft onto which the web is wound / unwound;
one or more tow lines which are secured, with the interposition of springs, to the profile, and pulleys for pulling the profile which is fixed to the lower edge of the web during the vault closing step;
a shaft arranged under the vault ridge, onto which the tow lines are wound / unwound;
coupling means between the two shafts that allow them to be synchronously driven;
a protection carter arranged over the vault which covers the shaft onto which the web is wound / unwound an end of said carter having the function of elastically applying a pressure onto the web to keep it tense in cooperation with an idle roller onto which said web is passed;
two wind-protection webs, said wind-protection webs being arranged simmetrically relative to the longitudinal simmetry plane of the structure and simmetrically relative to the cross-simmetry plane of the construction and covering the slot between the vault-web and the arch, thereby preventing the wind from entering and thereby diverting it moreover upwards.

6. A device according to the preceeding claims characterized in that it comprises one or more of the above described and/or illustrated features.
